# EUROPÄISCHE PATENTSCHRIFT

(11) **EP 0 974 049 B1**
(45) Veröffentlichungstag und Bekanntmachung des Hinweises auf die Patenterteilung: **03.09.2003**
(21) Anmeldenummer: 98919247.1
(22) Anmeldetag: 09.04.1998
(51) Int. Cl.: G01N 21/90

(54) **VORRICHTUNG ZUM ERKENNEN VON DIFFUS STREUENDEN VERUNREINIGUNGEN IN TRANSPARENTEN BEHÄLTERN**
DEVICE FOR DETECTING DIFFUSELY SCATTERED IMPURITIES IN TRANSPARENT RECEPTACLES
DISPOSITIF POUR DETECTER DES IMPURETES A DISPERSION DIFFUSE DANS DES RECIPIENTS TRANSPARENTS

(30) Priorität: 10.04.1997 DE 29706425 U
(43) Veröffentlichungstag der Anmeldung: 26.01.2000
(73) Patentinhaber: HEUFT SYSTEMTECHNIK GMBH, 56659 Burgbrohl (DE)
(72) Erfinder: HEUFT, Bernhard, D-56659 Burgbrohl (DE); ROESEL, Christoph, D-53173 Bonn (DE); SCHOENING, Bernd, D-56651 Niederzissen (DE)
(74) Vertreter: Gritschneder, Martin, Dipl.-Phys.
(86) Internationale Anmeldenummer: EP9802075
(87) Internationale Veröffentlichungsnummer: WO98045690

(56) Entgegenhaltungen:
- EP-A- 0 429 086
- WO-A-95/22756
- WO-A-97/14956
- DE-A- 3 245 908
- US-A- 4 459 023
- PATENT ABSTRACTS OF JAPAN vol. 014, no. 333 (P-1078), 18.Juli 1990 & JP 02 114158 A (HITACHI PLANT ENG & CONSTR CO LTD), 26.April 1990,

## Beschreibung

Die Erfindung betrifft eine Vorrichtung zum Erkennen von diffus streuenden Verunreinigungen in Behältern, die eine transparente Wandung aufweisen. Die Behälter werden nach der Dunkelfeldmethode beleuchtet und mittels einer optischen Erkennungseinrichtung auf Verunreinigungen untersucht.

Homogene, strukturlose Verunreinigungen in transparenten Behältern, z.B. Glasflaschen, sind mit herkömmlichen Untersuchungsverfahren nur sehr schwer zu erkennen. Bei den Verunreinigungen kann es sich dabei insbesondere um Reste von Dispersionsfarben, Rost, Mineralien und anderen halbdurchlässigen Stoffen handeln. Werden die Behälter nach der Hellfeld-Methode beleuchtet, so sind die strukturlosen Verunreinigungen kaum zu erkennen, da sie lediglich eine Schwankung im Transmissionsverhalten verursachen. Es ergeben sich weder Veränderungen der Kontraste noch eine ausreichend starke Verringerung der Bildhelligkeit, da der mittlere Streuwinkel bisweilen nur sehr klein ist. Mittels einer optischen Erkennungseinrichtung, wie einer CCD-Kamera, lassen sich daher solche Verunreinigungen nicht sicher erkennen, selbst wenn zusätzliche Methoden der Bildverarbeitung, z.B. Kontrastverstärkung, eingesetzt werden.

Die aus EP-A-0 429 086 bekannte Dunkelfeldmethode wird insbesondere verwendet, um transparente Kunststoffolien, beispielsweise Zigarettenverpackungen, in Glasflaschen zu erkennen. Die Kunststoffolienfetzen werden von der optischen Erkennungseinrichtung (CCD-Kamera mit Polarisationsfilter) als Bildelemente mit zumindest stellenweise starkem Kontrast erkannt. Homogene, strukturlose Verunreinigungen, wie Reste von Dispersionsfarben, erzeugen jedoch auch bei Dunkelfeldbelichtung nur Bildelemente, die selbst wiederum strukturlos und kontrastlos sind. Die Intensität des von der optischen Erkennungseinrichtung aufgenommenen Lichtes steigt zwar mit dem Streuvermögen der Verunreinigungen, d.h. mit der Schichtdicke, solange Absorbtionseffekte nicht überwiegen. Der Anstieg der Intensität der von der optischen Erkennungseinrichtung nachgewiesenen Streulichtmenge nimmt daher ausgehend von verunreinigungsfreien Behältern entsprechend der Schichtdicke der Verunreinigung zu. Der Nachweis von homogenen, strukturlosen Verunreinigungen erfordert daher eine Messung der absoluten Intensität. Solche Messungen sind jedoch bei Erkennungseinrichtungen erfahrungsgemäß mit einer großen Unsicherheit behaftet.

Der Erfindung liegt die Aufgabe zugrunde, das sichere Erkennen von homogenen, strukturlosen, diffus streuenden Verunreinigungen in Behältern mit einer transparenten Wandung zu ermöglichen.

Erfindungsgemäß wird diese Aufgabe mittels einer Vorrichtung gemäß Anspruch 1 gelöst.

Die mindestens eine Stelle, an der der Intensitätskontrast vorliegt, ist im allgemeinen die seitliche Begrenzung des Querschnitts eines Lichtstrahls. Dies setzt voraus, daß der Durchmesser des Lichtstrahls deutlich kleiner ist als die zu untersuchende Wandung des Behälters. Es genügt dabei, wenn der Intensitätskontrast längs des Lichtstrahls an der Stelle vorhanden ist, an der sich die zu untersuchende Wandung befindet. Vorzugsweise wird der Lichtstrahl daher auf die transparente Wandung des Behälters fokussiert.

Es besteht auch die Möglichkeit, ein Bündel paralleler, konvergierender oder divergierender Lichtstrahlen oder eine andere Art der Beleuchtung zu verwenden, die in der Wandung, auf der gegebenenfalls vorhandene Verunreinigungen erkannt werden sollen, eine kontrastreiche Hell/Dunkel-Verteilung der Intensität erzeugen. Insbesondere scharf gebündelte und kollimierte Lichtstrahlen wie Laserstrahlen sind zur Beleuchtung geeignet. Vorzugsweise wird eine schachbrettartige oder matrixförmige Anordnung punktförmiger Lichtquellen oder ein streifenförmiges Lichtmuster verwendet. Es ist auch möglich eine Loch- oder Streifenblende, die sich bei der Lichtquelle befindet, scharf auf die Behälterwandung abzubilden. Es ist auch möglich, die Wandung des Behälters mit einem Scanner abzutasten. Da sich homogene, diffus streuende Verunreinigungen beispielsweise durch großflächiges Verdampfen eines Lösungsmittels - in der Getränkeindustrie handelt es sich in der Regel um Wasser - erfolgen, kann das Kontrastmuster an mehreren voneinander entfernten Stellen abgetastet werden. Die Sicherheit der Erkennung von Verunreinigungen in Form von großflächigen Ablagerungen wird dadurch wesentlich verbessert. Der Abstand zwischen den einzelnen Kontraststellen oder Lichtpunkten ist dabei vorzugsweise deutlich kleiner als die zu erwartende Ausdehnungsfläche des Belags.

Wenn keine Verunreinigung an der transparenten Wandung vorhanden ist, so gehen die Lichtstrahlen im wesentlichen geradlinig durch die Wandung hindurch und gehen sie wegen der Dunkelfeldanordnung auch an der optischen Erkennungseinrichtung vorbei. Befindet sich an der transparenten Wandung dagegen eine diffus streuende Verunreinigung, z.B. eine dünne Schicht einer Dispersionsfarbe, so wird das Lichtbündel von der Verunreinigung gestreut, so daß ein Teil des Lichts von der optischen Erkennungseinrichtung aufgenommen wird. Infolge des innerhalb der transparenten Wandung vorhandenen Intensitätskontrastes des Lichtbündels enthält auch das von der optischen Erkennungseinrichtung aufgenommene Bild zumindest eine Stelle mit einem hohen Intensitätskontrast. Diese Stelle mit hohem Intensitätskontrast läßt sich weitgehend unabhängig von der Höhe des absoluten Intensitätswerts sehr zuverlässig erkennen.

Die erfindungsgemäße Erkennungsvorrichtung kann auch mit einer einzigen Lichtquelle und zwei oder mehr optischen Erkennungseinrichtungen ausgestattet sein. Die Lichtquelle kann beispielsweise mehrere Lichtstrahlen aussenden und so angeordnet sein, daß ein Teil der Lichtstrahlen auf die Bodenfläche der Flasche trifft, während ein anderer Teil die Seitenwand trifft. Es können dann zwei CCD-Kameras eingesetzt werden, wobei eine durch die Mündungsöffnung der Flasche hindurch den Boden inspiziert, während eine andere seitlich angeordnete CCD-Kamera die Seitenwand der Glasflasche inspiziert. Grundsätzlich ist es möglich sowohl mit einer oder mehreren Lichtquellen als auch mit einer oder mehreren optischen Erkennungseinrichtungen zu arbeiten.

Die von der optischen Erkennungseinrichtung aufgenommenen Kontraststrukturen können mit bildverarbeitenden Standardmethoden zur Kontur- oder Kontrastverstärkung deutlich hervorgehoben werden, so daß eine sichere Trennung zwischen Behältern mit Verunreinigung und solchen ohne Verunreinigung möglich ist. Wegen der Empfindlichkeit des Verfahrens lassen sich bereits sehr geringfügige Ablagerungen feststellen. Für den Nachweis großflächiger homogener Ablagerungen reicht deshalb im Prinzip bereits ein einziger Lichtstrahl und damit ein einziger Lichtpunkt in der transparenten Wandung aus, wodurch lediglich der Auftreffort des Lichtpunktes exemplarisch überprüft zu werden braucht.

Bei der Inspektion einer großen Anzahl gleicher Glasflaschen, die zwangsläufig eine gleiche Form des Flaschenbodens haben, tritt der oder die hellen Lichtpunkte immer an der gleichen Stelle auf, so daß diese Stellen gezielt zur Erkennung von strukturlosen, homogenen Verunreinigungen zu untersuchen sind.

Die erfindungsgemäße Vorrichtung läßt sich bei Anlagen, die mit Dunkelfeldbeleuchtung zur Erkennung strukturierter Fehler (Risse, Sprünge im Glas, polarisationsändernde Fehler, z.B. Kunststoffolien) arbeiten, ohne großen Aufwand installieren, indem eine Beleuchtungsquelle, die in der transparenten Wandung ein kontrastreiches Muster der Intensitätsverteilung hat, eingesetzt wird. Mit derselben optischen Erkennungseinrichtung (CCD-Kamera), die zur Erkennung der strukturierten Fehler eingesetzt wird, können die erzeugten Bildsignale auch auf das Vorhandensein von diffus streuenden Fehlern oder Verunreinigungen hin untersucht werden. Dasselbe Meßprinzip läßt sich auch auf die Überprüfung diffus streuender Oberflächen (geäzte oder mit Sandstrahl behandelte Oberflächen) von ansonsten transparenten Wandungen und zur Unterscheidung zwischen diffus streuenden Oberflächen und klaren Oberflächen anwenden.

Die erfindungsgemäße Vorrichtung kann auch in Verbindung mit einer nach dem Hellfeld-Prinzip arbeitenden Vorrichtung kombiniert werden. Insbesondere bei der Inspektion der Seitenwand von Glasflaschen wird allgemein nach dem Hellfeld-Prinzip gearbeitet, d.h. die Glasflaschen werden vor einer großflächigen Lichtquelle vorbeigeführt und dabei mittels einer CCD-Kamera auf das Vorhandensein von Fremdkörpern untersucht. Die diffus streuenden Verunreinigungen können mittels einer solchen ausschließlich nach dem Hellfeld-Prinzip arbeitenden Inspektionsvorrichtung nicht erkannt werden. Wenn jedoch zusätzlich eine Lichtquelle nach der Dunkelfeldmethode installiert, d.h. seitlich vor oder hinter den zu untersuchenden Glasflaschen oder sonstigen transparenten Behältern aufgestellt wird, und so ausgerichtet wird, daß ihre Strahlen bei Behältern ohne diffus streuende Verunreinigungen nicht auf die CCD-Kamera treffen und bei Behältern mit diffus streuenden Verunreinigungen jedoch zum Teil auch in die CCD-Kamera gestreut werden, so können gleichzeitig auch diffus streuende Verunreinigungen erkannt werden. Es ist dabei jedoch zweckmäßig, die Leuchtstärke der großflächigen Hellfeld-Lichtquelle auf einen mittleren Wert einzustellen, bei dem die CCD-Kamera im dynamischen Bereich arbeitet, so daß sie die zusätzliche Intensitätserhöhung erkennen kann, die sich beim Vorhandensein beispielsweise eines diffus streuenden Belages auf der Innenseite einer Glasflasche ergibt. Ist die Lichtquelle der erfindungsgemäßen Vorrichtung beispielsweise ein Feld von einigen parallel gerichteten Laserstrahlen, so sind auf dem von der CCD-Kamera erzeugten Bild innerhalb einer Umgebung mittlerer Lichtintensität relativ scharf begrenzte Punkte erhöhter Lichtintensität zu erkennen.

Die Erfindung wird nachfolgend anhand der Zeichnung näher erläutert, wobei
- Fig. 1: eine Vorrichtung zur Erkennung diffus streuender Verunreinigungen in Glasflaschen zeigt;
- Fig. 2: eine andere Anordnung von der Lichtquelle gegenüber der zu inspizierenden Flasche zeigt und
- Fig. 3: eine Vorrichtung zur Erkennung diffus streuender Verunreinigungen in Glasflaschen, die eine Lichtquelle und zwei optische Erkennungseinrichtungen aufweist.

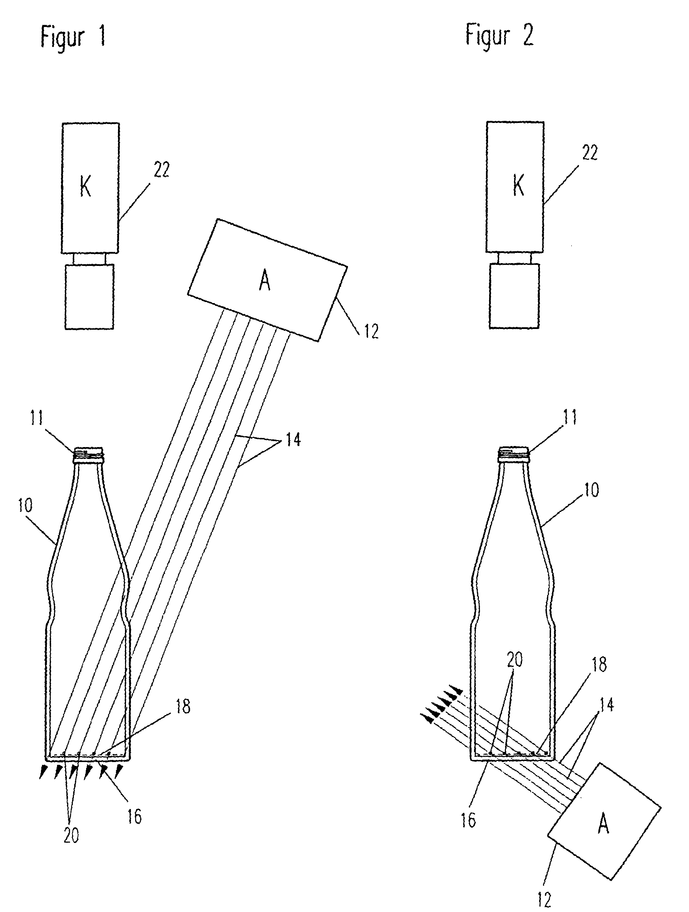

In den Fig. 1 und 2 wird jeweils eine Glasflasche 10 mit einer Halsöffnung 11 mittels eines nicht dargestellten Transporteurs transportiert. Bei diesem Transporteur kann es sich um einen der aus EP-A-0 124 164 bekannten Bauart handeln, bei dem elastische Finger unterhalb der Mündungseichel von Glasflaschen angreifen, so daß die Glasflaschen hängend und ohne Abstützung des Flaschenbodens transportiert werden. Wenn lediglich der Flaschenboden auf Verunreinigungen untersucht werden soll, so ist auch ein Transporteur, der aus EP-A-0 163 330 bekannten Bauart, bei dem die Glasflaschen von seitlich angreifenden Transportbändern gehalten werden und ebenfalls der Flaschenboden nicht abgestützt wird, möglich. Bei diesen Arten von Transporteuren treten keine störenden Relexe auf, wie sie bei einem Gliederketten-Transporteur auftreten können, auf dem die Glasflaschen stehend normalerweise transportiert werden.

Eine Lichtquelle 12 richtet mehrere scharfgebündelte Lichtstrahlen 14 mit einem Durchmesser von einigen Millimetern in Fig. 1 schräg von oben und Fig. 2 schräg von unten auf den Boden 16 der Glasflasche 10, wobei die Auftreffpunkte der Lichtstrahlen 14 jeweils über etwa den gesamten Boden 16 verteilt sind. Bei der Lichtquelle 12 handelt es sich um einen Laser, dessen Strahl durch Strahlenteiler in mehrere parallel zueinander ausgerichtete Strahlen 14 aufgespalten wird.

Im Bodenbereich der Glasflasche 10 befindet sich eine Schicht 18 einer homogenen, strukturlosen Verunreinigung. An den Stellen, an denen die Strahlen 14 die Schicht 18 der Verunreinigung durchdringen, wird ein Teil der Strahlen 14 diffus gestreut, so daß am Boden der Glasflaschen 10 helle Punkte 20 erscheinen. Ohne die Verunreinigungsschicht 18 würden die Strahlen 14 dagegen abgesehen von Reflexen an der Glasoberfläche ungehindert durch den Boden der Glasflaschen 10 hindurchgehen.

Mittels einer CCD-Kamera 22 wird durch die Öffnung 11 der Glasflaschen 10 hindurch ein Bild des Flaschenbodens aufgenommen. Bei Vorhandensein einer Verunreinigungsschicht 18, die die Strahlen diffus streut, sind die Punkte 20 auf dem von der CCD-Kamera erzeugten Bild erkennbar. Durch die scharfe Bündelung der Strahlen 14 stellen die Punkte 20 einen deutlichen Intensitätskontrast zu ihrer unmittelbaren Umgebung auf der Abbildung dar, der mit Standardverfahren der Bildverarbeitung ausgewertet werden kann. Wenn der Flaschenboden 16 dagegen frei von Verunreinigungen ist, so wird von ihm keine Strahlung diffus gestreut, so daß er auf dem von der CCD-Kamera 22 erzeugten Bild dunkel erscheint. Das an der Glasoberfläche des Bodens 16 reflektierte Licht geht seitlich an der CCD-Kamera 22 vorbei.

Bei dem Ausführungsbeispiel von Fig. 2 wird der Boden durch die Lichtquelle 12 von unten beleuchtet. Falls eine Verunreinigungsschicht 18 vorhanden ist, entstehen durch die diffuse Streuung der Strahlen 14 ebenfalls helle Punkte in der Schicht 18, die durch eine CCD-Kamera 22 wiederum durch die Öffnung 11 der Glasflasche 10 aufgenommen und weiterverarbeitet werden können. Bei einer Beleuchtung von unten ist ein möglichst flacher Einstrahlwinkel der Strahlen 14 zweckmäßig, um zu verhindern, daß Reflexe an der Innenwand der Glasflasche 10 in die CCD-Kamera 22 gelangen können.

Bei Anlagen zur Inspektion von Getränke-Leerflaschen ist die CCD-Kamera 22 ohnehin vorhanden, da sie Bestandteil der Einrichtung beispielsweise zur Bodeninspektion oder Seitenwandinspektion ist, mit der z.B. Fremdkörper im Bodenbereich oder Fehler im Seitenwandbereich der Glasflasche 10 erkannt werden. Es genügt daher die Hinzufügung der Lichtquelle 12, um bestehende Anlagen so umzurüsten, daß mit ihnen auch eingetrocknete Schichten von Dispersionsfarbenresten, Rost, Mineralien und sonstige semitransparente, diffus streuende Materialien erkannt werden können.

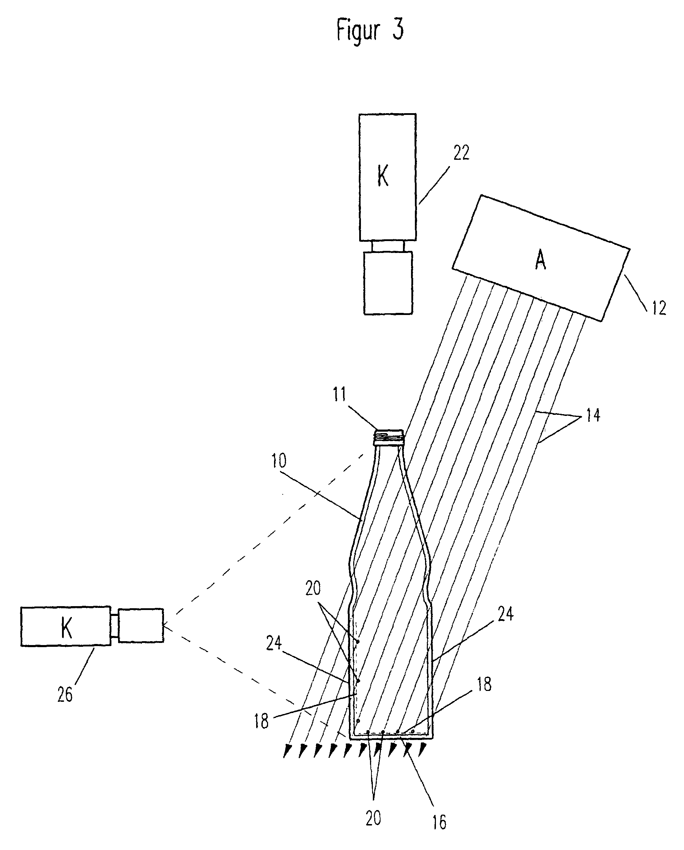

Fig. 3 zeigt noch ein Ausführungsbeispiel, ähnlich dem von Fig. 1, wobei die Lichtquelle 12 eine größere Anzahl von Lichtstrahlen 14 aussendet und diese Lichtstrahlen 14 über einen größeren Bereich verteilt sind, so daß nicht nur der gesamte Boden 16, sondern auch die Seitenwände 24 von den Lichtstrahlen 14 getroffen werden. Eine zweite CCD-Kamera 26 ist seitlich neben der Glasflasche 10 angeordnet und dient dazu, diffus streuende Verunreinigungen auf den Seitenwänden 24 der Glasflasche 10 zu erkennen. Die Lichtstrahlen 14 sind dabei stark kollimiert, so daß sie in beiden Seitenwänden 24 der Glasflasche 10 einen deutlichen Intensitätskontrast in gegebenenfalls vorhandenen diffus streuenden Verunreinigungen erzeugen.

## Patentansprüche

1. Vorrichtung zum Erkennen von diffus streuenden Verunreinigungen (18) in Behältern (10), die eine transparente Wandung (16) aufweisen, mit einer Lichtquelle (12), die einen oder mehrere Lichtstrahlen (14) zur Beleuchtung der Wandung (16) erzeugt, und mit einer optischen Erkennungseinrichtung (22) zur Erzeugung eines Bildes der beleuchteten Wandung (16), wobei die Lichtquelle (12) und die optische Erkennungseinrichtung (22) entsprechend einer Dunkelfelderkennung angeordnet sind und der oder die von der Lichtquelle (12) ausgesandten Lichtstrahlen (14) eine Intensitätsverteilung über ihren Querschnitt mit einem Intensitätskontrast an zumindest einer Stelle innerhalb ihres Querschnitts aufweisen, **dadurch gekennzeichnet,**
- **daß** die Lichtquelle (12) so ausgebildet ist, daß die Stelle des Intensitätskonrastes in der Wandung (16) liegt, die auf Verunreinigungen (18) untersucht werden soll, und
- **daß** die optische Erkennungseinrichtung (22) so ausgebildet ist, daß sie die Stelle der Wandung (16), an der der Intensitätskontrast vorliegt, auf den Intensitätskontrast hin untersucht.

2. Vorrichtung nach Anspruch 1, **dadurch gekennzeichnet, daß** die Lichtquelle (12) mehrere Strahlen (14) aussendet.

3. Vorrichtung nach Anspruch 1, **dadurch gekennzeichnet, daß** die Lichtquelle (12) ein Laser ist.

4. Vorrichtung nach einem der Ansprüche 1 bis 3, **dadurch gekennzeichnet, daß** die Lichtstrahlen (12) auf die Wandung (16) fokussiert sind.

5. Vorrichtung nach einem der Ansprüche 1 bis 4, **dadurch gekennzeichnet, daß** eine weitere Lichtquelle entsprechend einer Hellfeld- oder Dunkelfelderkennung angeordnet ist, die einen Lichtstrahl größeren Durchmessers und gleichförmiger Intensität erzeugt.

6. Vorrichtung nach einem der Ansprüche 1 bis 5, **dadurch gekennzeichnet, daß** eine oder mehrere Lichtquellen (12) vorgesehen sind, die Lichtstrahlen (14) auf unter einem Winkel zueinander stehende Wandungen (16, 24) richten, und daß mehrere optische Erkennungseinrichtungen (22, 26) vorgesehen sind, die jeweils auf eine dieser Wandengen (16, 24) gerichtet sind.

## Claims

1. A device for detecting diffusely scattering impurities (18) in containers (10), which have a transparent wall (16), the device comprising a light source (12) that produces one or more light beams (14) for illuminating the wall (16), and an optical detecting device (22) for producing an image of the illuminated wall (16), the light source (12) and the optical detecting device (22) being arranged for dark-field detection, and the light beam or beams (14) emitted by the light source (12) having an intensity distribution over their cross-section with an intensity contrast at least at one point within their cross-section, **characterized in that**:
- the light source (12) is so constructed that the point of intensity contrast lies in the wall (16) that is to be examined for impurities (18), and
- the optical detecting device (22) is so constructed that it examines, for intensity contrast, the point on the wall (16) where the intensity contrast occurs.

2. A device according to claim 1, **characterized in that** the light source (12) emits several beams (14).

3. A device according to claim 1, **characterized in that** the light source (12) is a laser.

4. A device according to any of claims 1 to 3, **characterized in that** the light beams (12) are focused on the wall (16).

5. A device according to any of claims 1 to 4, **characterized in that** another light source is arranged for bright-field or dark-field detection, which produces a light beam of larger diameter and more uniform intensity.

6. A device according to any of claims 1 to 5, **characterized in that** one or more light sources (12) are provided, which direct light beams (14) onto walls (16, 24) that are at an angle to one another, and **in that** several optical detecting devices (22, 26) are provided, which are each being directed onto one of these walls (16, 24).

## Revendications

1. Dispositif pour détecter des impuretés (18) à dispersion diffuse dans des récipients (10) qui présentent une paroi (16) transparente, avec une source lumineuse (12), qui génère un ou plusieurs faisceaux lumineux (14) pour l'éclairage de la paroi (16), et avec un appareil de détection optique (22) pour générer une image de la paroi (16) éclairée, la source lumineuse (12) et l'appareil de détection optique (22) étant disposés en fonction d'une détection de champ sombre et le ou les faisceaux lumineux (14) émis par la source de lumière (12) présentant une répartition d'intensité sur leur section avec un contraste d'intensité en au moins un endroit à l'intérieur de leur section, **caractérisé**
- **en ce que** la source lumineuse (12) est conçue de sorte que l'emplacement du contraste d'intensité se situe dans la paroi (16) qui doit être analysée au niveau des impuretés (18), et
- **en ce que** l'appareil de détection optique (22) est conçu de telle sorte qu'il analyse l'emplacement de la paroi (16), où l'on a le contraste d'intensité, en ce qui concerne le contraste d'intensité.

2. Dispositif selon la revendication 1, **caractérisé en ce que** la source lumineuse (12) émet plusieurs faisceaux (14).

3. Dispositif selon la revendication 1, **caractérisé en ce que** la source lumineuse (12) est un laser.

4. Dispositif selon l'une quelconque des revendications 1 à 3, **caractérisé en ce que** les faisceaux lumineux (12) sont focalisés sur la paroi (16).

5. Dispositif selon l'une quelconque des revendications 1 à 4, **caractérisé en ce qu'**une autre source lumineuse est disposée en fonction d'une détection de champ clair ou de champ sombre qui génère un faisceau lumineux de diamètre assez grand et d'intensité uniforme.

6. Dispositif selon l'une quelconque des revendications 1 à 5, **caractérisé en ce qu'**une ou plusieurs sources de lumière (12) sont prévues, les faisceaux de lumière (14) sont orientés sur des parois (16, 24) disposées les unes par rapport aux autres en formant un angle, et **en ce que** plusieurs appareils de détection optique (22, 26) sont prévus, qui sont dirigés respectivement sur l'une de ces parois (16, 24).
